# EUROPEAN PATENT APPLICATION

(11) **EP 4 818 869 A1**
(43) Date of publication of application: **07.10.2026**
(21) Application number: 24927453.1
(22) Date of filing: 11.07.2024
(51) Int. Cl.: G06F 3/04845, G06F 3/0486, G06F 3/14, H02S 50/00, G06F 3/04812

(54) **ELECTRONIC DEVICE PROVIDING DISPLAY FOR MONITORING SOLAR POWER GENERATION SYSTEM, AND CONTROL METHOD THEREFOR**

(30) Priority: 29.02.2024 KR 20240029582
(71) Applicant: Hanwha Solutions Corporation, Jung-gu Seoul 04541 (KR)
(72) Inventor: BAEK, Eun Je, Seoul 04541 (KR); MYUNG, Soo Hyun, Seoul 04541 (KR)
(74) Representative: Mooser, Sebastian Thomas
(86) International application number: PCT/KR2024/009976
(87) International publication number: WO 2025/183280

(57) **Abstract**

A control method for an electronic device for providing a display for monitoring a solar power generation system, according to one aspect, includes: generating a second graphic element including at least one first graphic element visualizing an individual photovoltaics module and outputting the second graphic element on the display, according to a first user operation; in response to a second user operation input in association with the second graphic element, outputting, on the display, an image in which the second graphic element is arranged on a grid; after the second graphic element is arranged on the grid, determining whether all outlines of the at least one first graphic element included in the second graphic element are located inside one of a plurality of grid cells included in the grid; and detecting an erroneous operation in response to determining that all outlines of the at least one first graphic element are not located inside the plurality of grid cells, and outputting, on the display, an image in which the erroneous operation has been corrected.

## Description

### Technical Field

The present disclosure relates to an electronic device for providing a display for monitoring a solar power generation system and a control method therefor.

### Background Art

Recently, with an increase in interest in eco-friendly energy technology, facilities of solar power generation systems for generating energy by using sunlight have increased. A solar power generation system is a system that generates electricity by collecting solar energy through solar panels, and electricity generated as such is supplied to power grids at home to be supplied as household electricity or to be stored in a battery and used. Generating of electricity through a solar power generation system is environmentally friendly and reduces electricity charges in long term, and thus has recently been in the spotlight.

With the development of technology for solar power generation systems, technology of monitoring operations of solar power generation systems and managing the solar power generation systems has been recognized as important technology. There is a need to develop technology of visually displaying a layout diagram corresponding to an actual layout of modules.

### Disclosure

### Technical Problem

Provided are an electronic device for providing a display for monitoring a solar power generation system and a control method therefor.

Also, provided are an electronic device and a control method therefor, the electronic device automatically outputting an image in which a graphic element is arranged at an appropriate location even if a user incorrectly operates the graphic element visualizing a photovoltaics module.

Also, provided is a computer-readable recording medium having recorded thereon a program for executing the method on a computer. The technical problems to be solved are not limited to those described above, and other technical problems may be present.

### Technical Solution

A control method for an electronic device for providing a display for monitoring a solar power generation system, according to one aspect of the present disclosure, includes: generating a second graphic element including at least one first graphic element visualizing an individual photovoltaics module and outputting the second graphic element on the display, according to a first user operation; in response to a second user operation input in association with the second graphic element, outputting, on the display, an image in which the second graphic element is arranged on a grid; after the second graphic element is arranged on the grid, determining whether all outlines of the at least one first graphic element included in the second graphic element are located inside one of a plurality of grid cells included in the grid; and detecting an erroneous operation in response to determining that all outlines of the at least one first graphic element are not located inside the plurality of grid cells, and outputting, on the display, an image in which the erroneous operation has been corrected.

An electronic device for providing a display for monitoring a solar power generation system, according to another aspect of the present disclosure, includes: at least one memory; at least one processor; an input/output interface; and a display, wherein the at least one processor controls the display to output a second graphic element including at least one first graphic element visualizing an individual photovoltaics module, according to a first user operation input through the input/output interface, in response to a second user operation input through the input/output interface in association with the second graphic element, controls the display to output an image in which the second graphic element is arranged on a grid, after the second graphic element is arranged on the grid, determines whether the at least one first graphic element included in the second graphic element is located inside a grid cell of the grid, and detects an erroneous operation in response to determining that the at least one first graphic element is not located inside the grid, and controls the display to output an image in which the erroneous operation has been corrected.

A computer-readable recording medium according to another embodiment of the present disclosure has recorded thereon a program for executing the control method on a computer.

### Description of Drawings

FIG. 1 is a configuration diagram illustrating an example of an electronic device for providing a display for monitoring a solar power generation system, according to an embodiment.
FIG. 2 is a flowchart for describing an example of a control method for an electronic device for providing a display for monitoring a solar power generation system, according to an embodiment.
FIG. 3 is a diagram for describing an example of a graphic element and a user operation input in association with the graphic element, according to an embodiment.
FIG. 4 is a diagram for describing an example in which all outlines of graphic elements visualizing individual photovoltaics modules are located inside a grid cell, according to an embodiment.
FIG. 5 is a diagram for describing an example in which all outlines of graphic elements visualizing individual photovoltaics modules are not located inside a grid cell, according to an embodiment.
FIG. 6 is a diagram for describing an example of a method of outputting a corrected image on a display, according to an embodiment.
FIG. 7 is a diagram for describing an example of a method of outputting a corrected image on a display, according to another embodiment.

### Best Mode

A control method for an electronic device for providing a display for monitoring a solar power generation system, according to one aspect of the present disclosure, includes: generating a second graphic element including at least one first graphic element visualizing an individual photovoltaics module and outputting the second graphic element on the display, according to a first user operation; in response to a second user operation input in association with the second graphic element, outputting, on the display, an image in which the second graphic element is arranged on a grid; after the second graphic element is arranged on the grid, determining whether all outlines of the at least one first graphic element included in the second graphic element are located inside one of a plurality of grid cells included in the grid; and detecting an erroneous operation in response to determining that all outlines of the at least one first graphic element are not located inside the plurality of grid cells, and outputting, on the display, an image in which the erroneous operation has been corrected.

An electronic device for providing a display for monitoring a solar power generation system, according to another aspect of the present disclosure, includes: at least one memory; at least one processor; an input/output interface; and a display, wherein the at least one processor controls the display to output a second graphic element including at least one first graphic element visualizing an individual photovoltaics module, according to a first user operation input through the input/output interface, in response to a second user operation input through the input/output interface in association with the second graphic element, controls the display to output an image in which the second graphic element is arranged on a grid, after the second graphic element is arranged on the grid, determines whether the at least one first graphic element included in the second graphic element is located inside a grid cell of the grid, and detects an erroneous operation in response to determining that the at least one first graphic element is not located inside the grid, and controls the display to output an image in which the erroneous operation has been corrected.

### Mode for Invention

Terms used in embodiments have meanings that are obvious to one of ordinary skill in the art, but may have different meanings according to an intention of ordinary skill in the art, precedent cases, or the appearance of new technologies. Also, some terms may be arbitrarily selected by the applicant, and in this case, the meaning of the selected terms will be described in detail in the detailed description. Thus, the terms used herein have to be defined based on the meaning of the terms together with the description throughout the specification.

When a part "includes" or "comprises" an element, unless there is a particular description contrary thereto, the part may further include other elements, not excluding the other elements. In addition, terms such as "unit" and "module" described in the specification denote a unit that processes at least one function or operation, which may be implemented in hardware or software, or implemented in a combination of hardware and software.

Further, the terms including ordinal numbers such as "first", "second", and the like used in the present embodiments may be used to describe various components, but the components should not be limited by the terms. The above terms may be used only to distinguish one component from another.

According to an embodiment, a "solar power generation system" may refer to a system including a plurality of photovoltaics modules, a plurality of inverters, and a hub server. The plurality of photovoltaics modules may be connected to a string to form a solar panel. Module level power electronics (MLPE) attached to the solar panel may transmit, to the inverter, unique information of the MLPE and real-time monitoring data including a power generation amount, a temperature, and defect information of an individual photovoltaics module. At this time, the unique information of the MLPE transmitted to the inverter may include a serial number of a module.

According to an embodiment, a "user" may be an installer of a solar power generation system, an owner of a solar power generation system, a manager of a solar power generation system, or the like, and may refer to any user of an electronic device for providing a display for monitoring a solar power generation system.

Hereinafter, embodiments will be described in detail with reference to accompanying drawings. However, the embodiments may be implemented in many different forms and are not limited to those described herein.

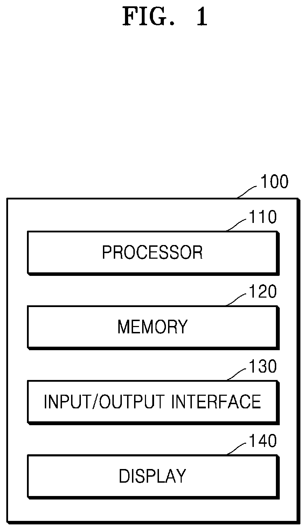

FIG. 1 is a configuration diagram illustrating an example of an electronic device for providing a display for monitoring a solar power generation system, according to an embodiment.

A device 100 shown in FIG. 1 includes only components related to the present embodiments, and it would be obvious to one of ordinary skill in the art that other general-purpose components may be included in addition to the components shown in FIG. 1.

For example, the device 100 may be implemented as any type of a device, such as a mobile device including a notebook personal computer (PC), a desktop PC, a laptop PC, a tablet computer, or a smartphone, a server device, or an embedded device. As a specific example, the device 100 may correspond to a smartphone, a tablet device, an augmented reality (AR) device, or an Internet of things (IoT) device, which performs speech recognition, image recognition, and image classification using artificial intelligence, but is not limited thereto.

A processor 110 controls general operations of the device 200. For example, the processor 110 may execute programs stored in a memory 120 to control the memory 120, a communication unit (not shown), an input/output interface 130, and a display 140 in general.

For example, the processor 110 may generate a second graphic element including at least one first graphic element visualizing an individual photovoltaics module included in a solar power generation system and output the same on the display 140, according to a first user operation. Then, in response to a second user operation input in association with the second graphic element, the processor 110 may output, on the display 140, an image in which the second graphic element is arranged on a grid. After the second graphic element is arranged on the grid, the processor 110 may determine whether all outlines of the at least one first graphic element included in the second graphic element are located inside one of a plurality of grid cells included in the grid. The processor 110 may detect an erroneous operation in response to determining that all outlines of the first graphic element are not located inside the grid cell, and control the display 140 to output an image in which the erroneous operation has been corrected.

According to an embodiment, the "second graphic element" may refer to a visualization of an arrangement relationship of a plurality of individual modules included in a photovoltaics module array. Here, the photovoltaics module array may be a solar panel including a plurality of photovoltaics modules. The photovoltaics module is a module that generates power by using a photoelectric effect, and the plurality of photovoltaics modules may be connected to each other to form the photovoltaics module array. A layout of the second graphic element is not necessarily limited to a rectangular shape, and may have any layout shape of photovoltaics modules actually arranged by an installer. Alternatively, the second graphic element may be one first graphic element visualizing an individual photovoltaics module.

According to an embodiment, the "grid" may refer to a graphic element output on the display 140 in response to an input of a user operation for setting a mode of the device 100 to a grid mode. The grid may be provided so that a user arranges a graphic element on the grid, the graphic element corresponding to an actual layout of a photovoltaics module array of a solar power generation system. The grid may include a plurality of unit grid cells having a same size. Alternatively, sizes of some or all grid cells included in the grid may be changed by a user operation. The grid cell may have a rectangular shape, but are not limited thereto and may have another polygonal shape.

According to an embodiment, "erroneous operation" may refer to a user operation of placing each of the first graphic elements visualizing individual photovoltaics modules at a location that spans a horizontal line or vertical line of the grid. For example, the processor 110 may detect the erroneous operation when a selected graphic element is lost before reaching an intended drop area and a location of the graphic element is incorrectly set while an installer of the solar power generation system arranges, on the grid after an installation work, the second graphic element that matches a layout of an installed panel in a drag and drop manner.

According to an embodiment, in order to output, on the display 140, an image in which the erroneous operation has been corrected, the processor 110 may identify a nearest intersection point that is closest to an uppermost left coordinate of the second graphic element from among intersection points where a plurality of horizontal lines and a plurality of vertical lines meet, the plurality of horizontal lines and the plurality of vertical lines being defined by an arrangement of the grid cells, and rearrange the second graphic element such that the uppermost left coordinate is located at the nearest intersection point. Here, a reference coordinate for identifying the nearest intersection point is not limited to the uppermost left coordinate, and may be a coordinate of any one vertex among all vertices of the first graphic element included in the second graphic element.

According to another embodiment, in order to output, on the display 140, the image in which the erroneous operation has been corrected, the processor 110 may calculate each of the areas of overlapping areas of cells with areas overlapping a reference graphic element from among the at least one first graphic element, determine a cell with the largest area of the overlapping area as a normal location where the reference graphic element is to be included, and rearrange the second graphic element such that the reference graphic element is located at the normal location.

The input/output interface 130 may include any type of device through which a user operation may be input, such as a physical keyboard, a virtual keyboard, a mouse, or a trackpad. The display 140 may be any type of device for displaying visual information, such as a mobile device screen including a computer monitor, a flat panel display, a liquid crystal display (LCD), a light emitting diode display, a plasma panel, or a touch screen display. At this time, when the display 140 is a touch screen display, the display 140 may serve as the input/output interface 130.

The processor 110 may be realized by using at least one of an application-specific integrated circuit (ASIC), a digital signal processor (DSP), a digital signal processing device (DSPD), a programmable logic device (PLD), a field programmable gate array (FPGA), a controller, a micro-controller, a microprocessor, and electric units for performing other functions.

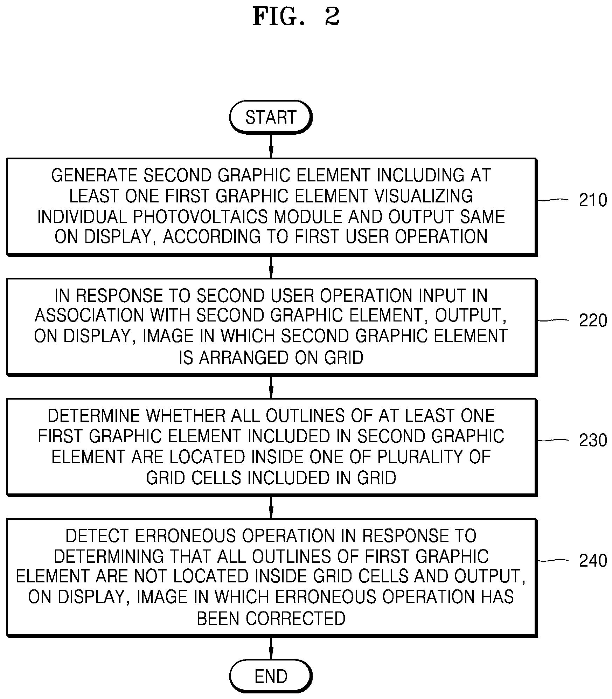

The memory 120 may include any non-transitory computer-readable recording medium. For example, the memory 120 may include a permanent mass storage device, such as random access memory (RAM), read-only memory (ROM), disk drive, solid state drive (SSD), or flash memory. In another example, the permanent mass storage device, such as ROM, SSD, flash memory, or disk drive, may be a separate permanent storage device distinguished from a memory. The memory 120 may store an operating system (OS) and at least one program code (e.g., code for the processor 110 to perform operations described below with reference to FIGS. 2 to 7).

Such software components may be loaded from a computer-readable recording medium separate from the memory 120. The separate computer-readable recording medium may be a recording medium that may be directly connected to the device 200, and for example, may include a computer-readable recording medium such as floppy drive, disk, tape, DVD/CD-ROM drive, or memory card.

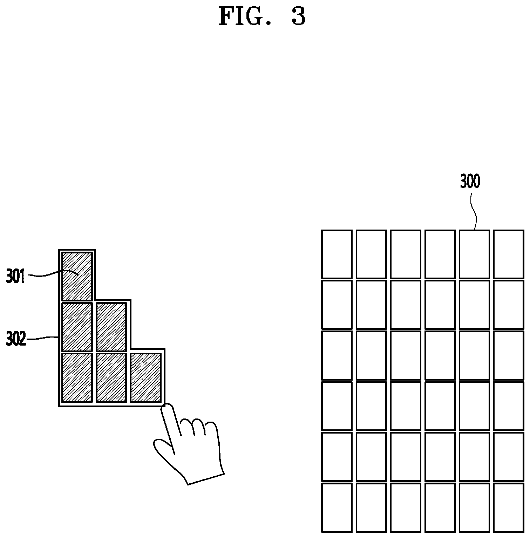

Alternatively, the software components may be loaded into the memory 120 through the communication unit, instead of the computer-readable recording medium. For example, at least one program may be loaded into the memory 120, based on a computer program (e.g., a computer program for the processor 110 to perform operations described below with reference to FIGS. 3 to 6) installed by files provided by developers or by a file distribution system for distributing an installation file of an application through a communication unit.

Hereinafter, an example of a method of controlling an electronic device for providing a display for monitoring a solar power generation system, by operating the device 100 of the present disclosure, will be described with reference to FIGS. 2 to 7. The control method of FIGS. 2 to 7 for an electronic device for providing a display for monitoring a solar power generation system includes operations performed in time series by the device 100 or the processor 110 shown in FIG. 1. Accordingly, even if omitted below, the details described above with respect to the device 100 or the processor 110 shown in FIG. 1 may also be applied to the method of FIGS. 2 to 7.

FIG. 2 is a flowchart for describing an example of a control method for an electronic device for providing a display for monitoring a solar power generation system, according to an embodiment.

In operation 210, the processor 110 controls the display 140 to output a second graphic element including at least one first graphic element visualizing an individual photovoltaics module, according to a first user operation.

According to an embodiment, the first user operation may be an operation of loading a graphic element corresponding to a layout of a photovoltaics module array of an actual solar power generation system. For example, a user may click on any graphic element output on the display 140 to cause the device 100 to obtain a layout of a solar panel from a hub server.

According to another embodiment, the first user operation may be an operation in which the user moves a first graphic element and directly sets an arrangement relationship between a plurality of first graphic elements to generate the second graphic element. Here, the second graphic element may be the same as a layout of an actually installed solar panel or may be a combination of the first graphic elements, in any shape.

The second graphic element may have a rectangular shape, in which the plurality of first graphic elements are arranged in a row horizontally or vertically, or a rectangular shape including m×n first graphic elements where m first graphic elements are arranged in a horizontal direction and n first graphic elements are arranged in a vertical direction. However, the second graphic element is not limited to a rectangular shape and may have any shape of layout where an installer actually arranged photovoltaics modules.

In operation 220, in response to a second user operation input in association with the second graphic element, the processor 110 controls the display 140 to output an image in which the second graphic element is arranged on a grid.

According to an embodiment, the second user operation may be an operation of dragging and dropping the second graphic element. The device 100 may allow a drag and drop operation to be performed on an item currently selected in a graphical user interface (GUI). In the drag and drop operation, items selected by a pointer (e.g., a mouse cursor or a pointing device on a touch-sensitive surface) may be moved (or "dragged") across a user interface according to movement of the pointer. When the selected item is released (or "dropped") on a desired target drop area, the selected item may be represented in the target drop area.

The drag operation may start by movement of a cursor (e.g., a mouse cursor or trackball cursor) or movement of a pointing device (e.g., a finger or touch pen) in the user interface. When the cursor or pointing device moves in the user interface, the second graphic element may move along with the cursor or pointing device in the user interface.

A specific example in which the processor 110 controls the image in which the second graphic element is arranged on the grid to be output on the display 140 in response to the second user operation will be described below with reference to FIG. 3.

FIG. 3 is a diagram for describing an example of a graphic element and a user operation input in association with the graphic element, according to an embodiment.

Referring to FIG. 3, the user may drag a second graphic element 302 including at least one first graphic element 301 and drop the same on a pre-set grid 300. The grid 300 includes a plurality of horizontal lines and a plurality of vertical lines, which are defined by an arrangement of grid cells. Here, the grid cell may be a rectangle with a horizontal length and a vertical length respectively equal to or greater than a horizontal length and a vertical length of the first graphic element.

Referring back to FIG. 2, in operation 230, after the arrangement of operation 220, the processor 110 determines whether all outlines of the at least one first graphic element included in the second graphic element are located inside one of a plurality of grid cells included in the grid. Alternatively, the processor 110 may determine whether one first graphic element overlaps a plurality of grid cells or only one grid cell.

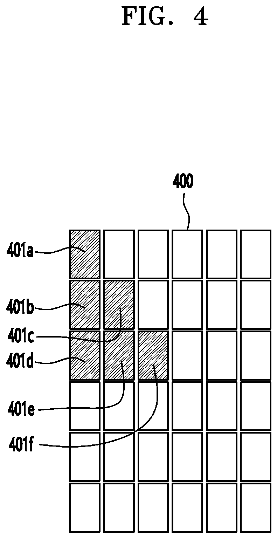

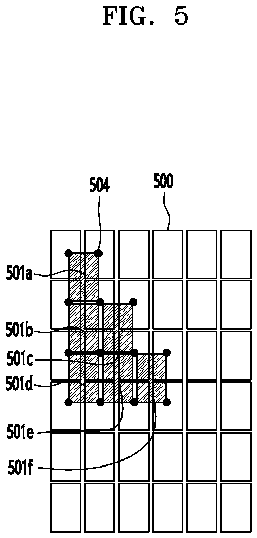

According to an embodiment, the processor 110 may obtain a coordinate of each of vertices of the first graphic element included in the second graphic element and determine whether the first graphic element is located inside the grid cell by comparing the coordinate of at least one of the vertices with coordinate planes respectively corresponding to the plurality of grid cells included in the grid. A specific example of operation 230 will be described below with reference to FIGS. 4 and 5.

FIG. 4 is a diagram for describing an example in which all outlines of graphic elements visualizing individual photovoltaics modules are located inside a grid cell, according to an embodiment.

Referring to FIG. 4, all outlines of a plurality of first graphic elements 401a, 401b, 401c, 401d, 401e, and 401f included in a second graphic element are all located inside one of grid cells included in a grid 400. The processor 110 may determine that the all outlines of the first graphic elements 401a, 401b, 401c, 401d, 401e, and 401f included in the second graphic element, which is arranged according to a drag and drop operation of the user, are located inside one of the plurality of grid cells, and determine that a user operation is not an erroneous operation.

FIG. 4 illustrates an embodiment in which the first graphic element and the grid cell completely overlap each other because the sizes of the first graphic element and the grid cell are the same, but the present disclosure is not limited thereto. For example, the processor 110 may determine that the first graphic element is located inside the grid cell as long as the first graphic element is not outside the grid cell, including a case where the first graphic element is smaller than the grid cell and a case where the first graphic element overlaps one or two corners of the grid cell or does not contact any corner of the grid cell.

FIG. 5 is a diagram for describing an example in which all outlines of graphic elements visualizing individual photovoltaics modules are not located inside a grid cell, according to an embodiment.

Referring to FIG. 5, outlines of a plurality of first graphic elements 501a, 501b, 501c, 501d, 501e, and 501f included in a second graphic element are not located inside one of grid cells included in a grid 500. The processor 110 may obtain a coordinate of each of vertices of the first graphic element included in the second graphic element and determine whether the first graphic element is located inside the grid cell by comparing a coordinate 504 of at least one of the vertices with coordinate planes respectively corresponding to the plurality of grid cells included in the grid 500. The processor 110 may detect an erroneous operation in response to determining that the all outlines of the first graphic elements 501a, 501b, 501c, 501d, 501e, and 501f included in the second graphic element, which is arranged according to a drag and drop operation of the user, are not located inside one of the plurality of grid cells.

Referring back to FIG. 2, in operation 240, the processor 110 detects an erroneous operation in response to determining that all outlines of the first graphic element are not located inside the grid cell, and control the display 140 to output an image in which the erroneous operation has been corrected.

According to an embodiment, in order to output, on the display 140, the image in which the erroneous operation has been corrected, the processor 110 may identify a nearest intersection point that is closest to an uppermost left coordinate of the second graphic element from among intersection points where a plurality of horizontal lines and a plurality of vertical lines meet, the plurality of horizontal lines and the plurality of vertical lines being defined by an arrangement of the grid cells, and rearrange the second graphic element such that the uppermost left coordinate is located at the nearest intersection point. According to another embodiment, the processor 110 may calculate the areas of overlapping areas of cells with areas overlapping a reference graphic element from among the at least one first graphic element, determine a cell with a largest area of the overlapping area as a normal location where the reference graphic element is to be included, and rearrange the second graphic element such that the reference graphic element is located at the normal location.

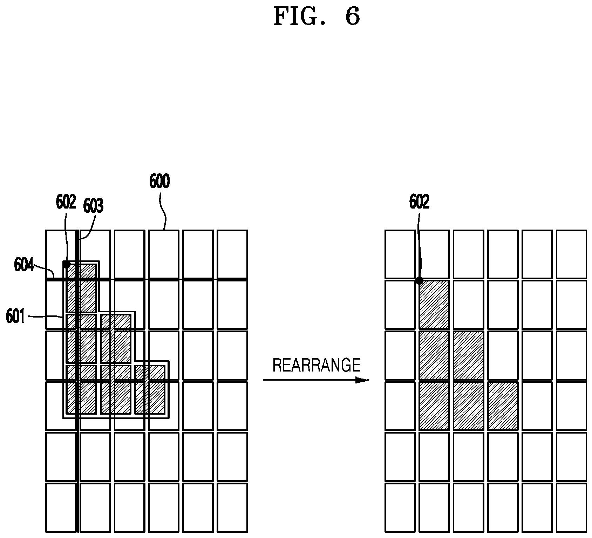

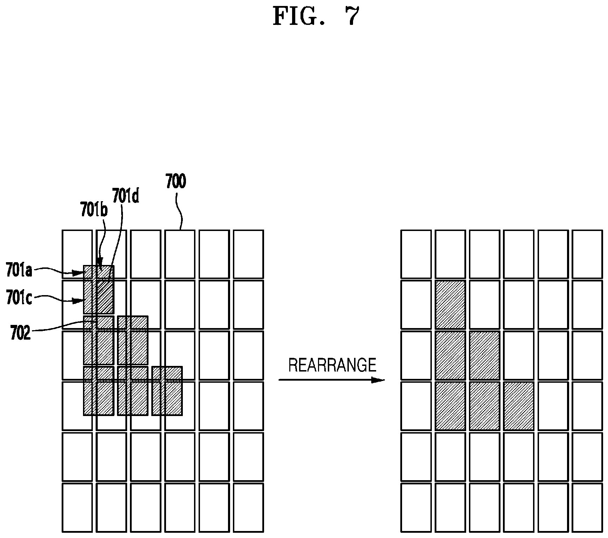

According to embodiments, even if the user incorrectly operates a graphic element visualizing a photovoltaics module, the electronic device providing the display 140 for monitoring the solar power generation system may automatically output an image in which the graphic element is arranged at an appropriate location. Specific examples of a method of outputting, on a display, an image in which an erroneous operation has been corrected will be described below with reference to FIGS. 6 and 7.

FIG. 6 is a diagram for describing an example of a method of outputting a corrected image on a display, according to an embodiment.

Referring to FIG. 6, the processor 110 may detect an erroneous operation in response to determining that all outlines of a first graphic element included in a second graphic element 601, which is arranged according to a drag and drop operation of the user, are not located inside one of a plurality of grid cells. In order to output an image in which an erroneous operation has been corrected on the display 140, the processor 110 may identify a nearest intersection point that is closest to an uppermost left coordinate 602 of the second graphic element 601, from among intersection points of vertical lines and horizontal lines included in a grid 600.

In other words, an intersection point of a vertical line 603 and a horizontal line 604, which is closest to the uppermost left coordinate 602, may be determined as the nearest intersection point. Then, the processor 110 may rearrange the second graphic element 601 such that the uppermost left coordinate 602 is located at the nearest intersection point. FIG. 6 illustrates an embodiment in which a reference coordinate for identifying a nearest intersection point is an uppermost left coordinate, but the reference coordinate is not limited to the uppermost left coordinate and may be a coordinate of one of all vertices of a first graphic element included in a second graphic element.

FIG. 7 is a diagram for describing an example of a method of outputting a corrected image on a display, according to another embodiment.

Referring to FIG. 7, the processor 110 may calculate the areas of overlapping areas of cells with areas overlapping a reference graphic element from among at least one first graphic element. FIG. 7 illustrates an example in which a first graphic element corresponding to a first space of a first column, from among first graphic elements included in a second graphic element, is used as a reference graphic element. The processor 110 may calculate the areas of overlapping areas 701a, 701b, 701c, and 701d for a plurality of cells over which the reference graphic element spans.

The processor 110 may determine a cell with the largest area of the overlapping areas 701a, 701b, 701c, and 701d as a normal location where the reference graphic element is to be included. In other words, the cell with the overlapping area 701d having the largest area may be determined as a location of the reference graphic element originally intended by the user. Then, the processor 110 may rearrange the second graphic element such that the reference graphic element is located at the normal location.

Unless an order is clearly stated or unless otherwise stated, operations configuring a method according to the present disclosure may be performed in an appropriate order. The present disclosure is not necessarily limited by an order the operations are described. In the present disclosure, the use of all examples or exemplary terms (for example, "etc.") is merely for describing the present disclosure in detail and the scope of the present disclosure is not limited by those examples or exemplary terms.

Meanwhile, the above-described methods may be written as a program executable on a computer, and may be implemented in a general-purpose digital computer operating a program using a computer-readable recording medium. In addition, a structure of data used in the above-described methods may be recorded on a computer-readable medium through various methods. Examples of the computer-readable medium include storage media such as magnetic storage media (for example, read-only memory (ROM), random-access memory (RAM), universal serial bus (USB), floppy disks, and hard disks), and optical readable media (for example, CD-ROM and DVD).

One of ordinary skill in the art will understand that the present disclosure may be implemented in a modified form without departing from the essential features of the present disclosure. Therefore, the disclosed methods should be considered from an explanatory perspective rather than a limited perspective, and the scope of rights is exhibited in the claims, not in the above description, and should be interpreted to include all differences within the equivalent scope.

## Claims

1. A control method for an electronic device for providing a display for monitoring a solar power generation system, the control method comprising:
generating a second graphic element including at least one first graphic element visualizing an individual photovoltaics module and outputting the second graphic element on the display, according to a first user operation;
in response to a second user operation input in association with the second graphic element, outputting, on the display, an image in which the second graphic element is arranged on a grid;
after the second graphic element is arranged on the grid, determining whether all outlines of the at least one first graphic element included in the second graphic element are located inside one of a plurality of grid cells included in the grid; and
detecting an erroneous operation in response to determining that all outlines of the at least one first graphic element are not located inside the plurality of grid cells, and outputting, on the display, an image in which the erroneous operation has been corrected.

2. The control method of claim 1, wherein the second graphic element visualizes an arrangement relationship of a plurality of individual modules included in a photovoltaics module array.

3. The control method of claim 1, wherein the second user operation is an operation of dragging and dropping the second graphic element and the grid cell is rectangular with a horizontal length and a vertical length respectively equal to or greater than a horizontal length and a vertical length of the first graphic element.

4. The control method of claim 1, wherein the determining comprises:
obtaining a coordinate of each of vertices of the at least one first graphic element included in the second graphic element; and
determining whether the at least one first graphic element is located inside the plurality of grid cells by comparing the coordinate of at least one of the vertices with coordinate planes respectively corresponding to the plurality of grid cells included in the grid.

5. The control method of claim 1, wherein the outputting, on the display, of the image in which the erroneous operation has been corrected comprises:
identifying, from among intersection points where a plurality of horizontal lines and a plurality of vertical lines meet, the plurality of horizontal lines and the plurality of vertical lines being defined by an arrangement of the plurality of grid cells, a nearest intersection point that is closest to an uppermost left coordinate of the second graphic element; and
rearranging the second graphic element such that the uppermost left coordinate is located at the nearest intersection point.

6. The control method of claim 1, wherein the outputting, on the display, of the image in which the erroneous operation has been corrected comprises:
calculating each of areas of overlapping areas of cells having areas overlapping a reference graphic element from among the at least one first graphic element;
determining a cell with a largest area of the overlapping area as a normal location where the reference graphic element is to be included; and
rearranging the second graphic element such that the reference graphic element is located at the normal location.

7. A computer-readable recording medium having recorded thereon a program for causing a computer to execute the control method of claim 1.

8. An electronic device for providing a display for monitoring a solar power generation system, the electronic device comprising:
at least one memory;
at least one processor;
an input/output interface; and
a display,
wherein the at least one processor is configured to control the display to output a second graphic element including at least one first graphic element visualizing an individual photovoltaics module, according to a first user operation input through the input/output interface, in response to a second user operation input through the input/output interface in association with the second graphic element, control the display to output an image in which the second graphic element is arranged on a grid, after the second graphic element is arranged on the grid, determine whether the at least one first graphic element included in the second graphic element is located inside a grid cell of the grid, and detect an erroneous operation in response to determining that the at least one first graphic element is not located inside the grid, and controls the display to output an image in which the erroneous operation has been corrected.

9. The electronic device of claim 8, wherein the second graphic element visualizes a photovoltaics module array including a plurality of individual modules.

10. The electronic device of claim 8, wherein the second user operation is an operation of dragging and dropping the second graphic element, and the grid cell is rectangular with a horizontal length and a vertical length respectively equal to or greater than a horizontal length and a vertical length of the first graphic element.

11. The electronic device of claim 8, wherein the processor is further configured to obtain a coordinate of a vertex of the at least one first graphic element included in the second graphic element and determine whether the at least one first graphic element is located inside the grid cell by comparing the coordinate of the vertex with a coordinate of the grid cell.

12. The electronic device of claim 8, wherein the processor is further configured to identify, from among intersection points where horizontal lines and vertical lines of the grid meet, a nearest intersection point that is closest to an uppermost left coordinate of the second graphic element, and rearrange the second graphic element such that the uppermost left coordinate is located at the nearest intersection point.

13. The electronic device of claim 8, wherein the processor is further configured to calculate areas of overlapping areas of cells having areas overlapping a reference graphic element, based on the reference graphic element from among the at least one first graphic element, determine a cell with a largest calculated area as a normal location of the reference graphic element, and rearrange the second graphic element such that the reference graphic element is located at the normal location.
